Europäisches Patentamt

European Patent Office

Office européen des brevets

(11) Veröffentlichungsnummer : **0 111 252**
**B1**

(12) **EUROPÄISCHE PATENTSCHRIFT**

(45) Veröffentlichungstag der Patentschrift :
07.05.86

(21) Anmeldenummer : 83112039.9

(22) Anmeldetag : 01.12.83

(51) Int. Cl.⁴ : **C 09 J   5/06**

(54) Verfahren zum dauerhaften spannungsausgleichenden Verbinden von Konstruktionsteilen mit unterschiedlichen Ausdehnungskoeffizienten.

(30) Priorität : 09.12.82 DE 3245553

(43) Veröffentlichungstag der Anmeldung :
20.06.84 Patentblatt 84/25

(45) Bekanntmachung des Hinweises auf die Patenterteilung : 07.05.86 Patentblatt 86/19

(84) Benannte Vertragsstaaten :
AT BE CH DE FR GB IT LI NL SE

(56) Entgegenhaltungen :
EP-A- 0 036 648
DE-A- 2 518 471
DE-A- 3 028 823
GB-A- 1 223 413

(73) Patentinhaber : Compakta-Werke Baustoff GmbH
Traunring 65
D-8225 Traunreut (DE)

(72) Erfinder : Baust, Eberhard
Hochfellnstrasse 8
D-8221 Matzing (DE).
Erfinder : Englmaier, Adolf
Theodor-Körner-Strasse 12
D-8225 Traunreut (DE)

(74) Vertreter : Habbel, Hans-Georg, Dipl.-Ing.
Postfach 3429 Am Kanonengraben 11
D-4400 Münster (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum dauerhaften Verbinden von Konstruktionsteilen aus Glas, Steingut, Keramik, Porzellan mit Metallen und Kunststoffen mit unterschiedlichen Ausdehnungskoeffizienten unter Verwendung eines Klebstoffes.

In weiten Bereichen der Technik, z. B. der Haushaltsgeräteindustrie, ist es häufig erforderlich, aus Metall oder Glas oder Steingut bzw. Keramik bestehende Bauteile mit einem vorzugsweise aus Kunststoff bestehenden Griff auszurüsten, der wärmeisolierende Eigenschaften besitzt. Hierbei hat sich herausgestellt, daß vielfach Kleber, die auf Glas, Metall oder Porzellan, Keramik und Steingut gut haften, meist weniger gut an Kunststoff haften. Auch bei den auftretenden relativ hohen Temperaturen wirken sich die unterschiedlichen Ausdehnungskoeffizienten der verschiedenen Werkstoffe zerstörend auf die Verbindung aus.

Aus der EP-A-0 036 648 ist ein Verfahren zum Verbinden von Substraten durch Heißsiegeln bekannt, wobei das Erhitzen sowohl durch das direkte Siegelverfahren erfolgt, bei dem das Aufheizen durch ein Siegelwerkzeug über eines der zu verbindenden Substrate durchgeführt wird als auch das indirekte Siegelverfahren angewandt werden kann, bei dem nur eines der Substrate z. B. mit dem Siegelwerkzeug, einem Infrarotstrahler, einer Gasflamme oder durch elektrische Widerstandsheizung, auf die gewünschte Siegeltemperatur erwärmt wird.

Als Siegelmedium wird ein Kieselsäureheteropolykondensat verwendet, das durch Hydrolyse und Polykondensation von mindestens einem Organosilan und mindestens einer Komponente aus· der Gruppe der siliciumfunktionellen Silane erstellt wird.

Aus der DE-A-30 28 823 ist ein Verfahren zum Dekorieren metallischer Gegenstände mittels Heißprägefolie bekannt, bei dem ebenfalls die zur Aktivierung der Kleberschicht erforderliche Wärme von dem zu dekorierenden Gegenstand, d. h. der Unterlage, aufgebracht wird.

Mit dem bekannten Verfahren ist das wirksame Ankleben von Konstruktionsteilen mit unterschiedlichem Ausdehnungskoeffizient nicht zu erreichen.

Der Erfindung liegt die Aufgabe zugrunde, ein Verfahren zu schaffen, mit dem bei schneller Durchführung des Verfahrens Konstruktionsteile aus Glas, Steingut, Keramik, Porzellan mit Metallen und Kunststoffen mit unterschiedlichen Ausdehnungskoeffizienten dauerhaft und spannungsausgleichend miteinander verbunden werden können. Außerdem sollen die miteinander verbundenen Konstruktionsteile eine hohe Tragfähigkeit aufweisen und spülmaschinenfest sein.

Diese der Erfindung zugrundeliegende Aufgabe wird dadurch gelöst, daß sich eines der beiden miteinander zu verbindenden Konstruktionsteile vor Aufbringen des Klebstoffes im erhitzten Zustand befindet, wobei als Klebstoff ein- oder mehrkomponentige Silikonkleber eingesetzt werden und das andere Konstruktionsteil unter Zwischenschaltung der Klebstoffschicht auf das sich im erhitzten Zustand befinende Bauteil aufgeklebt wird.

Beispielsweise bei der Herstellung von bei Kaffeemaschinen eingesetzten, aus Glas bestehenden Kannen wird dabei so vorgegangen, daß während des Herstellungsprozesses der Glaskanne, wenn diese sich im Bereich der Abkühlphase befindet, sofort das Aufbringen des üblicherweise aus Kunststoff bestehenden Handgriffes erfolgt, und zwar unter Zwischenschaltung des ein- oder mehrkomponentigen Silikonklebers. Hierdurch wird nicht nur die angestrebte höhere Tragfestigkeit und gute Verbindung zwischen den beiden Bauteilen geschaffen, sondern gleichzeitig wird ein Arbeitsverfahren geschaffen, das eine schnellere Produktion ermöglicht, da es nunmehr nicht mehr erforderlich ist, mit dem Anbringen des Handgriffes so lange zu warten, bis die Glaskanne die Umgebungstemperatur erreicht hat.

Gemäß dem erfindungsgemäßen Verfahren können alle Werkstoffe wie Glas, Metall, Kunststoff, Steingut, Keramik, Porzellan usw. in ihrer unterschiedlichsten Kombination sicher und tragfest miteinander verbunden werden, wobei überraschenderweise festgestellt werden konnte, daß die erfindungsgemäß hergestellte Verbindung eine wesentlich höhere Tragfestigkeit aufweist als die bisher bekannten Verbindungen und daß die so erzielten Verbindungen darüberhinaus noch spülmaschinenfest sind.

Als Klebstoffe haben sich mit Feuchtigkeit reagierende Silikonkleber bzw. durch einen Härter aushärtende' Silikonkleber bewährt, wobei die letzteren als sogenannte Zweikomponenten-Silikonkleber bekanntgeworden sind.

Silikonkautschukmassen wurden bisher in der Industrie je nach Art und Zusammensetzung der Silikonkautschukmassen und deren Härtungsverfahren für viele Verwendungszwecke eingesetzt. Silikonkautschuk kann im Maschinen- und Flugzeugbau, in Industrieanlagen, im Bauwesen, im Schiffsbau, in der Medizin, im Formenbau und für kunstgewerbliche Anwendungen mit dichtenden, verbindenden, klebenden, aber auch trennenden, isolierenden Funktionen eingesetzt werden. Außerdem verwendet man Silikonkautschukmassen in Dispersionsform oder gelöst in Lösungsmitteln auch für Klebstoffzwecke.

Bei dem erfindungsgemäßen Verfahren hat es sich als vorteilhaft herausgestellt, daß die Kleber Pigmente und/oder Füllstoffe enthalten, wobei der Anteil bis zu 10 % betragen kann.

Der Einsatzbereich des erfindungsgemäßen Verfahrens erstreckt sich natürlich weit über die vorbeschriebene Herstellung von Kaffeekannen mit Griff hinaus. Ein weiterer Einsatzbereich sind z. B. die Betätigungsgriffe an Deckel für Kochtöpfe, Bratpfannen od. dgl. oder die Handgriffe an Backöfen und in einem weiten Umfang die Bauteile, die in der allgemeinen Industrie eingesetzt werden.

## Patentansprüche

1. Verfahren zum dauerhaften Verbinden von Konstruktionsteilen aus Glas, Steingut, Keramik, Porzellan, mit Metallen und Kunststoffen mit unterschiedlichen Ausdehnungskoeffizienten unter Verwendung eines Klebstoffes, dadurch gekennzeichnet, daß sich eines der beiden miteinander zu verbindenden Konstruktionsteile vor Aufbringen des Klebstoffes im erhitzten Zustand befindet, wobei als Klebstoff ein- oder mehrkomponentige Silikonkleber eingesetzt werden und das andere Konstruktionsteil unter Zwischenschaltung der Klebstoffschicht auf das sich im erhitzten Zustand befindende Bauteil aufgeklebt wird.

2. Verfahren nach Anspruch 1, dadurch gekennzeichnet, daß das erhitzte Bauteil bis auf 200 °C erhitzt ist.

3. Verfahren nach Anspruch 1 und 2, dadurch gekennzeichnet, daß das erhitzte Bauteil vorzugsweise eine Temperatur von 150° aber nicht unter 50° aufweist.

4. Verfahren nach Anspruch 1, dadurch gekennzeichnet, daß der Klebstoff Pigmente und/oder Füllstoffe enthält.

5. Verfahren nach Anspruch 4, dadurch gekennzeichnet, daß der Anteil der Pigmente und/oder Füllstoffe bis zu 10 % beträgt.

## Claims

1. Process for durably bonding constructional components of glass, earthenware, ceramic or porcelain to metals and plastics having different coefficients of expansion, using an adhesive, characterised in that one of the two constructional components to be bonded to one another is in the heated state before application of the adhesive, that one-component and multi-component silicone adhesives are employed as the adhesive and that the other constructional component is glued, with interposition of the adhesive layer, onto the component which is in the heated state.

2. Process according to Claim 1, characterised in that the heated constructional component is heated to temperatures of up to 200 °C.

3. Process according to Claim 1 and 2, characterised in that the heated component is preferably at a temperature of 150° but not below 50°.

4. Process according to Claim 1, characterised in that the adhesive contains pigments and/or fillers.

5. Process according to Claim 4, characterised in that the proportion of the pigments and/or fillers is up to 10 %.

## Revendications

1. Procédé pour l'assemblage durable d'éléments de construction en verre, pierre, céramique, porcelaine, à des métaux et matières synthétiques ayant des coefficients de dilatation différents, avec utilisation d'un adhésif, caractérisé par le fait que l'un des deux éléments de construction à assembler entre eux se trouve, avant l'application de l'adhésif, à l'état chauffé, un adhésif de silicone à un ou plusieurs constituants étant utilisé comme adhésif et l'autre élément de construction étant collé, avec interposition de la couche d'adhésif, sur l'élément de construction se trouvant à l'état chauffé.

2. Procédé selon la revendication 1, caractérisé par le fait que l'élément de construction chauffé est chauffé jusqu'à 200 °C.

3. Procédé selon les revendications 1 et 2, caractérisé par le fait que l'élément de construction chauffé présente de préférence une température de 150 °C mais non inférieure à 50 °C.

4. Procédé selon la revendication 1, caractérisé par le fait que l'adhésif contient des pigments et/ou charges.

5. Procédé selon la revendication 4, caractérisé par le fait que la proportion des pigments et/ou charges représente jusqu'à 10 %.